# EUROPEAN PATENT APPLICATION

(11) **EP 4 787 226 A1**
(43) Date of publication of application: **05.08.2026**
(21) Application number: 24870463.7
(22) Date of filing: 12.09.2024
(51) Int. Cl.: G06K 7/14

(54) **METHOD, APPARATUS AND DEVICE FOR GENERATING ARTISTIC QR CODE, AND MEDIUM**

(30) Priority: 27.09.2023 CN 202311276380
(71) Applicant: Alipay (Hangzhou) Digital Service Technology Co., Ltd., Hangzhou, Zhejiang 310000 (CN)
(72) Inventor: LIU, Zhengbao, Hangzhou, Zhejiang 310063 (CN); REN, Fubin, Hangzhou, Zhejiang 310063 (CN); YANG, Leilei, Hangzhou, Zhejiang 310063 (CN)
(74) Representative: Winter, Brandl - Partnerschaft mbB
(86) International application number: PCT/CN2024/118537
(87) International publication number: WO 2025/066919

(57) **Abstract**

The specification discloses an artistic two-dimensional code image generation method, apparatus, and device, and medium. The method may include: obtaining a first region image that is in a to-be-fused artistic image and that corresponds to a padding region in a two-dimensional code template, where the padding region is a region for placing a padding bit character in an encoded data stream; generating, based on a binary sequence value corresponding to the first region image, a padding data sequence in a padding bit region in the encoded data stream corresponding to the two-dimensional code template; generating an initial two-dimensional code image based on the padding data sequence; and fusing the initial two-dimensional code image with a second region image of the to-be-fused artistic image, to generate the artistic two-dimensional code image, where the second region image is an image other than the first region image in the to-be-fused artistic image.

## Description

### TECHNICAL FIELD

This application relates to the field of computer data processing technologies, and in particular, to an artistic two-dimensional code image generation method, apparatus, and device, and a medium.

### BACKGROUND

With the development of computer technologies, styles of two-dimensional codes are diversified, and a rise of artistic codes attracts more attention on networks. An artistic two-dimensional code in a conventional technology is usually generated by using a pure artificial intelligence (Al) model based on a two-dimensional code image and style description input by a user. However, such an artistic two-dimensional code has uncertainty, and the generated artistic two-dimensional code may not meet a service requirement.

Therefore, how to generate, in a more stable manner, an artistic two-dimensional code meeting a service requirement is a technical problem that needs to be resolved urgently.

### SUMMARY

Embodiments of this specification provide an artistic two-dimensional code image generation method, apparatus, and device, and a medium, to resolve a problem of uncertainty in an existing artistic two-dimensional code image generation method.

To resolve the foregoing technical problem, embodiments of this specification are implemented as follows.

An embodiment of this specification provides an artistic two-dimensional code image generation method, including:
obtaining a first region image that is in a to-be-fused artistic image and that corresponds to a padding region in a two-dimensional code template, where the padding region is a region that is in the two-dimensional code template and that is for placing a padding bit character in an encoded data stream;
generating, based on a binary sequence value corresponding to the first region image, a padding data sequence in a padding bit region in the encoded data stream corresponding to the two-dimensional code template;
generating an initial two-dimensional code image based on the padding data sequence; and
fusing the initial two-dimensional code image with a second region image of the to-be-fused artistic image, to generate the artistic two-dimensional code image, where the second region image is an image other than the first region image in the to-be-fused artistic image.

An embodiment of this specification provides an artistic two-dimensional code image generation apparatus, including:
a first region image obtaining module, configured to obtain a first region image that is in a to-be-fused artistic image and that corresponds to a padding region in a two-dimensional code template, where the padding region is a region that is in the two-dimensional code template and that is for placing a padding bit character in an encoded data stream;
a padding data sequence generating module, configured to generate, based on a binary sequence value corresponding to the first region image, a padding data sequence in a padding bit region in the encoded data stream corresponding to the two-dimensional code template;
an initial two-dimensional code image generating module, configured to generate an initial two-dimensional code image based on the padding data sequence; and
an artistic two-dimensional code image generating module, configured to fuse the initial two-dimensional code image with a second region image of the to-be-fused artistic image, to generate the artistic two-dimensional code image, where the second region image is an image other than the first region image in the to-be-fused artistic image.

An embodiment of this specification provides an artistic two-dimensional code image generation device, including:
at least one processor; and
a memory in communication connection with the at least one processor.

The memory stores instructions executable by the at least one processor, and the instructions are executed by the at least one processor, to cause the at least one processor to:
obtain a first region image that is in a to-be-fused artistic image and that corresponds to a padding region in a two-dimensional code template, where the padding region is a region that is in the two-dimensional code template and that is for placing a padding bit character in an encoded data stream;
generate, based on a binary sequence value corresponding to the first region image, a padding data sequence in a padding bit region in the encoded data stream corresponding to the two-dimensional code template;
generate an initial two-dimensional code image based on the padding data sequence; and
fuse the initial two-dimensional code image with a second region image of the to-be-fused artistic image, to generate the artistic two-dimensional code image, where the second region image is an image other than the first region image in the to-be-fused artistic image.

An embodiment of this specification provides a computer-readable medium, storing computer-readable instructions, where the computer-readable instructions are executable by a processor, to implement an artistic two-dimensional code image generation method.

At least one embodiment of this specification can achieve the following beneficial effects: The first region image corresponding to the padding region in the two-dimensional code template in the to-be-fused artistic image is binarized, to obtain the padding data sequence. The initial two-dimensional code image is generated based on the padding data sequence. The initial two-dimensional code image is fused with the second region image of the to-be-fused artistic image, to generate the artistic two-dimensional code image. In this way, the generated artistic two-dimensional code cannot only meet a personalized requirement of a user, but also ensure a success rate of identifying the artistic two-dimensional code, so that an artistic two-dimensional code meeting a service requirement can be obtained.

### BRIEF DESCRIPTION OF THE DRAWINGS

To describe the technical solutions in embodiments of this specification or in a conventional technology more clearly, the following briefly describes the accompanying drawings for describing embodiments or the conventional technology. It is clear that the accompanying drawings in the following descriptions show merely some embodiments described in this application, and a person of ordinary skill in the art may still derive other drawings from these accompanying drawings without creative efforts.
FIG. 1 is a schematic diagram of an application scenario of an artistic two-dimensional code image generation method according to an embodiment of this specification;
FIG. 2 is a schematic flowchart of an artistic two-dimensional code image generation method according to an embodiment of this specification;
FIG. 3 is a schematic diagram of a structure of an encoded data stream of a two-dimensional code in a conventional technology;
FIG. 4 is a schematic diagram of a structure of an encoded data stream of a two-dimensional code according to an embodiment of this specification;
FIG. 5 is a swim lane diagram of an artistic two-dimensional code image generation method according to an embodiment of this specification;
FIG. 6 is a schematic diagram of a structure of an artistic two-dimensional code image generation apparatus according to an embodiment of this specification; and
FIG. 7 is a schematic diagram of a structure of an artistic two-dimensional code image generation device according to an embodiment of this specification.

### DETAILED DESCRIPTION

To make objectives, technical solutions, and advantages of one or more embodiments of this specification clearer, the following clearly and completely describes the technical solutions of one or more embodiments of this specification with reference to specific embodiments of this specification and corresponding accompanying drawings. It is clear that the described embodiments are merely some rather than all of embodiments of this specification. All other embodiments obtained by a person of ordinary skill in the art based on embodiments of this specification without creative efforts shall fall within the protection scope of one or more embodiments of this specification.

The following describes in detail the technical solutions provided in embodiments of this specification with reference to the accompanying drawings.

In a conventional technology, with the development of computer technologies, styles of two-dimensional codes are diversified, and a rise of artistic codes attracts more attention on networks. On a carrier of a two-dimensional code, there is a demand of brand personalized expression from a merchant end and a client's demand of obtaining hunting traffic of an artistic code. However, an existing artistic two-dimensional code is usually generated in a pure artificial intelligence manner based on a two-dimensional code image and style description input by a user. There is uncertainty. A possibly generated artistic two-dimensional code greatly differs from a service requirement. For example, a probability that the generated artistic two-dimensional code is identified is low, and an artistic image is aesthetically unappealing.

To resolve the defects in the conventional technology, the following embodiments are provided in this solution:

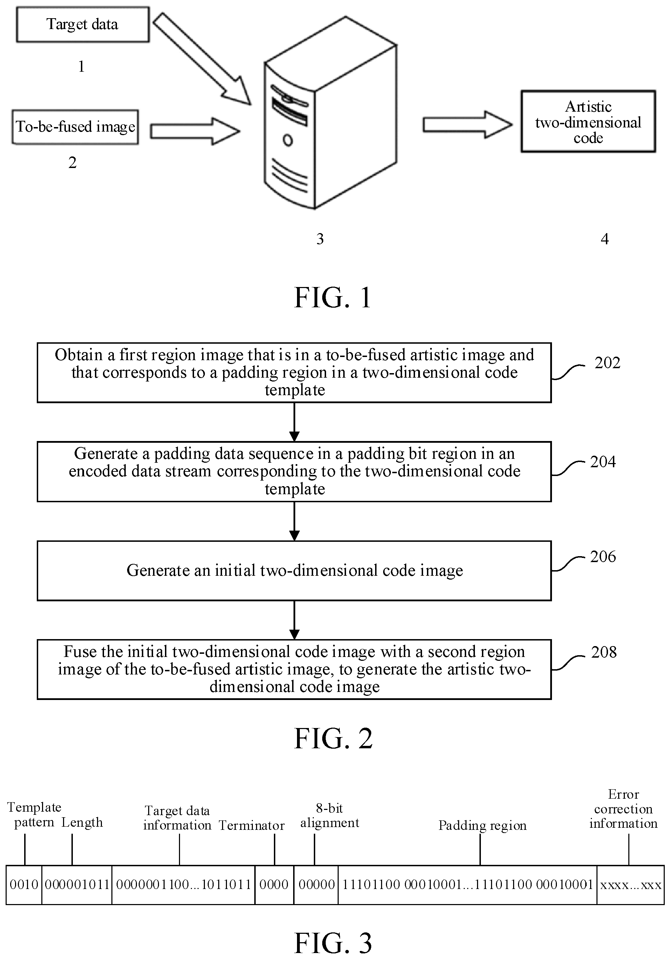

FIG. 1 is a schematic diagram of an application scenario of an artistic two-dimensional code image generation method according to an embodiment of this specification.

As shown in FIG. 1, this solution may mainly include target data 1, a to-be-fused artistic image 2, a server 3, and an artistic two-dimensional code 4. The target data 1 may be a website, a link, a character that needs to be identified, or the like, may represent content carried in a two-dimensional code, and may be parsed and identified after the two-dimensional code is scanned. The server 3 may select an appropriate two-dimensional code template based on a length of the target data 1. A data capacity of the two-dimensional code template needs to be greater than a length of encoded data of the target data. The server 3 may determine, based on the two-dimensional code template and the to-be-fused artistic image 2, an image part that is in the to-be-fused artistic image and that corresponds to a padding region of the two-dimensional code template, may determine a padding character in the padding region of the two-dimensional code template based on an image feature of the image part, and further may directly embody data that may embody some features of an artistic image in an encoded binary stream of the two-dimensional code, to obtain an initial two-dimensional code image. The server 3 may further fuse another part of the to-be-fused artistic image 2 with an initial two-dimensional code. For example, as shown in FIG. 1, an ECData region and a Data region in the initial two-dimensional code image are fused with a partial image corresponding to the to-be-fused artistic image, to obtain the artistic two-dimensional code 4. The ECData region may represent a region of error correction information, and the Data region may represent a region of encoded data corresponding to the target data. This is not specifically presented herein.

An artistic two-dimensional code image generation method according to an embodiment of this specification is described in detail below with reference to the accompanying drawings.

FIG. 2 is a schematic flowchart of an artistic two-dimensional code image generation method according to an embodiment of this specification. From a program perspective, a procedure may be performed by a program or an application client installed on an application server.

As shown in FIG. 2, the procedure may include the following steps.

Step 202: Obtain a first region image that is in a to-be-fused artistic image and that corresponds to a padding region in a two-dimensional code template, where the padding region is a region that is in the two-dimensional code template and that is for placing a padding bit character in an encoded data stream.

The to-be-fused artistic image in this embodiment of this specification may be a picture favored by a user, may be a brand LOGO, may be an image such as an avatar of the user, or may be description information of some images. The image may be generated by using a model.

During actual application, there may be 40 existing two-dimensional code templates. For example, a version 1 is a 21 x 21 matrix, a version 2 is a 25 x 25 matrix, and a version 40 is a 177 x 177 matrix. The server may select an appropriate two-dimensional code template. For example, an appropriate two-dimensional code template is selected based on information such as a length of target data that needs to be padded into a two-dimensional code and an error correction level. Alternatively, an appropriate two-dimensional code template may be selected with reference to a feature of the to-be-fused artistic image.

During actual application, after a version and an error correction level of a two-dimensional code template are determined, a data capacity of the two-dimensional code template can be determined. For a specific data capacity corresponding to the two-dimensional code template, refer to an existing rule about or descriptions of a two-dimensional code. Details are not described herein.

In this embodiment of this specification, the first region image may be a region that is in the to-be-fused artistic image and that corresponds to a position in the padding region of the two-dimensional code template, may be a partial image including an obvious feature, or may be the entire image.

In this embodiment of this specification, the encoded data stream may be a data stream that is determined based on the target data and the two-dimensional code template and that is for padding the two-dimensional code template in a padding order. The encoded data stream may be a string of data formed by 0 and 1.

In this embodiment of this specification, the padding region may represent a position region that is in the two-dimensional code template and that is of the padding bit character, which may be referred to as a padding character, a padding code, or the like in the encoded data stream, and may be in aggregated distribution, or may be in discrete distribution. The aggregated distribution may be understood as that display positions of characters in a template are adjacent, consecutive, or a quantity of consecutive adjacent characters is greater than a preset quantity, and most characters are aggregated. The discrete distribution may be understood as that display positions of characters in a template are dispersed, and display positions of most characters are not aggregated, or may be understood as that there is a small quantity of consecutive adjacent characters.

Step 204: Generate, based on a binary sequence value corresponding to the first region image, a padding data sequence in a padding bit region in the encoded data stream corresponding to the two-dimensional code template.

The binary sequence value may represent data obtained by performing binarization processing on the first region image of the to-be-fused artistic image. During actual application, a sorting position of binary characters in the binary sequence value in the padding data sequence may be determined in a padding order of the two-dimensional code, so that a two-dimensional code image generated based on the encoded data stream including the padding data sequence can present the first region image or an image feature of the to-be-fused artistic image.

The padding order of the two-dimensional code may be that two-dimensional codes are sequentially padded upward by using two units in a matrix as a group, and after a column of two-dimensional codes is completely padded, the two-dimensional codes start to be sequentially padded downward, where two units in a group may be both padded from right to left.

Step 206: Generate an initial two-dimensional code image based on the padding data sequence.

The initial two-dimensional code image in this embodiment of this specification may be an image obtained by completing padding of the two-dimensional code template. During actual application, the encoded data stream for padding the two-dimensional code template may be generated based on the padding data sequence, and the two-dimensional code template is padded with the encoded data stream in the padding order of the two-dimensional code, to obtain the initial two-dimensional code image.

Step 208: Fuse the initial two-dimensional code image with a second region image of the to-be-fused artistic image, to generate the artistic two-dimensional code image, where the second region image is an image other than the first region image in the to-be-fused artistic image.

In this embodiment of this specification, the second region image may represent a part of an image or the entire image in another region different from the first region image in the to-be-fused artistic image. An existing AI model, for example, a style transfer model may be used to fuse a region part corresponding to the second region image of the initial two-dimensional code image with the second region image of the artistic two-dimensional code, to obtain a fused two-dimensional code image.

During actual application, the first region image in the to-be-fused artistic image may further cover a padding region in the two-dimensional code image before or after the fusion, to improve an aesthetic degree of the artistic two-dimensional code when it is ensured that data does not change and identification of the artistic two-dimensional code is not affected, so that a generated artistic two-dimensional code can meet a service requirement of the user.

It should be understood that an order of some of the steps of the method according to one or more embodiments of this specification may be exchanged with each other based on actual needs, or some of the steps may be omitted or deleted.

According to the method in FIG. 2, the first region image corresponding to the padding region in the two-dimensional code template in the to-be-fused artistic image is binarized, to obtain the padding data sequence. The initial two-dimensional code image is generated based on the padding data sequence. The initial two-dimensional code image is fused with the second region image of the to-be-fused artistic image, to generate the artistic two-dimensional code image. In this way, the generated artistic two-dimensional code cannot only meet a personalized requirement of a user, but also ensure a success rate of identifying the artistic two-dimensional code, so that an artistic two-dimensional code meeting the service requirement can be obtained.

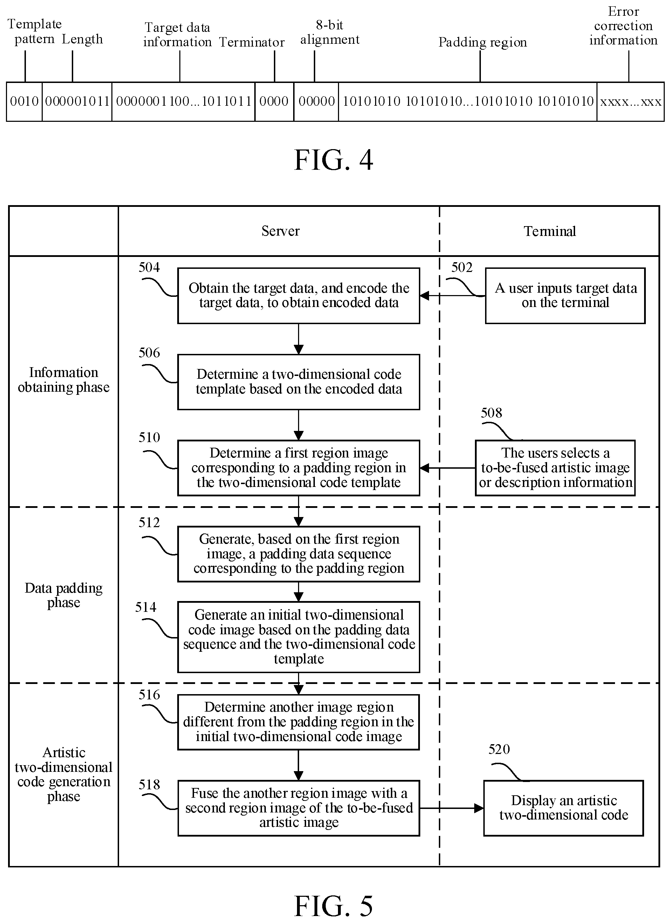

To describe more clearly a difference between a two-dimensional code generated based on an encoded data stream in a conventional technology and an artistic two-dimensional code generated based on an encoded stream in this embodiment of this description, FIG. 3 is a diagram of a structure of an encoded data stream of a two-dimensional code in a conventional technology, and FIG. 4 is a diagram of a structure of an encoded data stream of a two-dimensional code according to an embodiment of this specification.

As shown in FIG. 3 and FIG. 4, the encoded data stream may include a template pattern part, a length part, a target data information part, a terminator part, an 8-bit alignment part, a padding region part, and an error correction information part. In the conventional technology, for a padding bit region, 11101100 00010001 is used for repetition, and is used as a data sequence of a padding region. However, in this embodiment of this specification, to better embody an artistic image in a two-dimensional code, binarization processing may be performed on a first region image corresponding to a padding region in an artistic image, to obtain a binary data sequence. The binary data sequence may be encoded into a padding bit region, so that a feature of the artistic image may be better presented in a generated artistic two-dimensional code image. For example, for a brand logo of a merchant, a middle part of the brand logo is a part that can reflect a main feature of the brand. According to the method in this embodiment of this specification, binarization processing may be performed on an image part corresponding to a padding region in the brand logo, and a binary data sequence obtained through processing is padded into the padding region, so that the brand logo can be displayed in the artistic two-dimensional code, to better reflect brand information in the artistic two-dimensional code.

According to the method in FIG. 2, this embodiment of this specification further provides some specific implementations of the method. Descriptions are provided below.

During actual application, a larger padding region is more beneficial to reflecting an artistic image in a two-dimensional code. Optionally, the method in this embodiment of this specification may further include:
obtaining target data;
encoding the target data according to a plurality of coding schemes, to obtain a plurality of data codes; and
selecting a data code having a shortest length from the plurality of data codes as a target data code.

The generating an initial two-dimensional code image based on the padding data sequence may specifically include:
generating the initial two-dimensional code image based on the padding data sequence and the target data code.

In this embodiment of this specification, the target data may include character string data such as a website, a link, or a character that needs to be identified. The character string data may include uppercase letters, lowercase letters, digits, special characters, and the like. The character string data may be used for jumping from a page to a target page after being successfully scanned. The target page may be a payment code page, a page of an activity performed by a user, an image page, or the like.

The coding scheme may include a numeric mode (numeric coding), an alphanumeric mode (character coding), a byte mode (byte coding), a Kanji mode (double-byte coding), and another coding scheme. The coding scheme of the numeric mode may be used for encoding a digit, and one character occupies 3.3 bits. The coding scheme of the alphanumeric mode may be used for encoding a digit, an uppercase letter, a special symbol, and the like, and one character occupies 5.5 bits. The coding scheme of the byte mode may be used for encoding an ASCII code, and one character occupies eight bits. The coding scheme of the Kanji mode may be used for encoding a Chinese character, a Japanese character, and the like, and one character occupies 13 bits. In this embodiment of this specification, the target data may be encoded according to the plurality of coding schemes, and then a shortest code is selected from an encoded result as a code for generating a two-dimensional code image.

In addition, when a code length corresponding to the target data is short, a two-dimensional code version that is of a low version may alternatively be selected as far as possible, and this is beneficial to improving an identification rate.

During actual application, a user may select an error correction level based on an actual requirement, or the error correction level may be automatically determined by a server or a computer based on an application scenario or a service requirement of the two-dimensional code. For example, to more easily identify an artistic two-dimensional code successfully or when a service with low security is required, a high error correction level, such as a level H, may be selected. For another example, if content jumped to after code scanning is sensitive and has a high security requirement, a low error correction level, such as a level L, may be selected, so that 7% of damage in the artistic two-dimensional code may be corrected. When there is a large quantity of error data, the target page may not be jumped to, to avoid data leakage on the target page and improve data security. A specific manner of setting the error correction level and a specific level may be set based on an actual requirement. This is not specifically limited herein.

A shortest length may indicate that a minimum quantity of bits are occupied, and may alternatively be understood as a shortest data sequence obtained according to different coding schemes. The matrix of the two-dimensional code template is fixed, and a total quantity of bits included in the two-dimensional code template is fixed. A smaller quantity of bits of a target data code indicates a larger padding region and a larger region corresponding to the to-be-fused artistic image. More features in the to-be-fused artistic image may be presented in the two-dimensional code image, so that the to-be-fused artistic image may be displayed more clearly.

To better meet a user requirement, in this embodiment of this specification, the user may directly provide the to-be-fused image, or may provide some pieces of description information, and a computer generates an image meeting the user requirement based on the description information. Optionally, the method in this embodiment of this specification may further include one of the following manners:
obtaining image description information, and generating the to-be-fused artistic image based on the image description information by using an image generation model; and
obtaining the to-be-fused artistic image selected by a user from a preset image library.

In this embodiment of this specification, the image description information may be feature information for representing the to-be-fused artistic image, for example, features such as scenery, blue hue, drama, animation, an animal, a cartoon character, and a game or description information representing an image style. The server may generate a description interface on which the user may select or fill in the image description information. The page may include a label representing the image description information for the user to select, or may include a region in which the user may enter text, so that the user may describe the to-be-fused artistic image based on a requirement for the to-be-fused artistic image, and an AI image generation model may be used to generate an image based on obtained image description information. The preset image library may be a database including images that are pre-stored in the server, for the user to select, or may be a database used by the user to store images. It may be understood that, during actual application, a web page may be jumped to on a to-be-fused artistic image selection interface for the user to search for an image, so that the user can select a satisfying to-be-fused artistic image.

To enable the generated artistic two-dimensional code image to meet the service requirement or the user requirement, the to-be-fused artistic image may be at least a part of an image. Optionally, the method in this embodiment of this specification may further include:
obtaining an initial to-be-fused image;
obtaining placement position information of the two-dimensional code, where the placement position information indicates a position that is in the initial to-be-fused image and that is for placing the two-dimensional code; and
selecting the to-be-fused image from the initial to-be-fused image based on the placement position information, where the to-be-fused image is a part of the initial to-be-fused image.

In this embodiment of this specification, the initial to-be-fused image may be an image generated by using the AI image generation model based on the image description information, or may be an image selected by the user from the preset image library. The position that is in the initial to-be-fused image and that is for placing the two-dimensional code may be selected by the user from the initial to-be-fused image, or may be determined by the server based on a main feature in the initial to-be-fused image. For example, if the image is a human image, the position may be determined to be on a human face. Alternatively, the to-be-fused image may be the entire initial to-be-fused image, and specific selection may be determined based on the user requirement.

Optionally, in this embodiment of this specification, the obtaining placement position information of the two-dimensional code may specifically include one of the following manners:
determining the placement position information of the two-dimensional code based on an operation performed by the user on an image selection box, where the image selection box is a selection box that is displayed in the initial to-be-fused artistic image and that is for selecting a display position of the two-dimensional code;
obtaining position information of an anchor point in the initial to-be-fused image, where the anchor point is for representing a position that is of a center point of the initial two-dimensional code image and that is in the initial to-be-fused image, and determining a region within a preset distance from the anchor point as a region for placing the two-dimensional code; and
determining a region of a drawn object in the initial to-be-fused artistic image by using a feature region selection model, and determining the region as a region for placing the two-dimensional code.

During actual application, a size, a position, and the like of the image selection box may be adjusted, to select a display region of the two-dimensional code from the initial to-be-fused image. The preset distance may be a size selected by the user, or may be a customized size, for example, 5 cm or 7 cm. The feature region selection model may be used for selecting the region of the drawn object in the image, for example, an image, a building, an animal, or LOGO. It may be understood that a shape of the region in which the two-dimensional code is placed may be set by the user, for example, a square shape or a circular shape.

Sizes of the to-be-fused artistic image and the two-dimensional code template may be adjusted, so that a position correspondence between the to-be-fused artistic image and the two-dimensional code template can be determined. Optionally, in this embodiment of this specification, the obtaining a first region image that is in a to-be-fused artistic image and that corresponds to a padding region in a two-dimensional code template may specifically include:
adjusting the to-be-fused artistic image and the two-dimensional code template to a same size; and
selecting the first region image from the to-be-fused artistic image based on the to-be-fused artistic image and the two-dimensional code template that have the same size and position information of the padding region in the two-dimensional code template.

In this embodiment of this specification, adjusting may mean keeping the size of the to-be-fused artistic image unchanged and adjusting a full two-dimensional code template to a size the same as that of the to-be-fused artistic image, or may mean keeping the size of the two-dimensional code template unchanged and adjusting the to-be-fused artistic image to a size the same as that of the two-dimensional code template, or may mean adjusting, based on a preset size, both the to-be-fused artistic image and the two-dimensional code template to the preset size.

The first region image may represent a region image whose position in the to-be-fused artistic image is the same as the position of the padding region in the two-dimensional code template. For example, the to-be-fused artistic image and the two-dimensional code template that are adjusted to the same size may be established in a coordinate system having a same feature, a coordinate position of the padding region in the two-dimensional code template is determined, and then an image region corresponding to the coordinate position is selected from the to-be-fused artistic image based on the coordinate position.

In an implementation, the server may select, from the to-be-fused artistic image based on position information of each unit rectangle in the two-dimensional code template, a sub-image corresponding to the padding region in the two-dimensional code template. Optionally, in this embodiment of this specification, the selecting the first region image from the to-be-fused artistic image based on position information of the padding region in the two-dimensional code template may specifically include:
obtaining the position information of each unit rectangle in the padding region in the two-dimensional code template; and
for any unit rectangle of each unit rectangle, selecting a sub-image corresponding to the any unit rectangle from the to-be-fused artistic image based on position information of the any unit rectangle, where a size of the sub-image is the same as that of the any unit rectangle, and the first region image indicates a sub-image corresponding to each unit rectangle.

In this embodiment of this specification, the unit rectangle may represent a size of space that needs to be rendered for each piece of data in the two-dimensional code template. For example, a two-dimensional code template version 1 is a 17 x 17 matrix. This may represent that each column and each row of the two-dimensional code template is divided into 17 small grids of equal size, and these small grids of equal size may represent the size of space that needs to be rendered for each piece of data, and may be referred to as a unit rectangle.

During actual application, each unit rectangle in the two-dimensional code template may be numbered in a preset order, for example, an order from left to right and from top to bottom, and for another example, an order from right to left and from bottom to top, to obtain number information of each unit rectangle. Alternatively, the to-be-fused artistic image that has the same size as that of the two-dimensional code template may be divided based on a size of a unit rectangle, to obtain a plurality of sub-images. Each sub-image may be numbered in the foregoing preset order. A numbering rule may be the same as that of the two-dimensional code template. A sub-image whose number is the same as that of the unit rectangle corresponding to the padding region may be selected from the plurality of sub-images, to obtain the first region image.

In an implementation, the server may perform binarization processing on the first region image, to obtain a data sequence corresponding to the first region image. Optionally, in this embodiment of this specification, the performing binarization processing on the first region image, to obtain a binary sequence value may specifically include:
performing binarization processing on a sub-image corresponding to each unit rectangle in the to-be-fused artistic image, to obtain the binary sequence value.

In this embodiment of this specification, the binarization processing may be determining, based on shade of color of each sub-image, a binary value corresponding to each sub-image. In this way, the binary sequence value corresponding to the first region image is obtained. It may be understood that binarization may represent that 0 or 1 are used to represent various data.

In an implementation, optionally, the method in this embodiment of this specification may further include:
performing binarization processing on the first region image, to obtain the binary sequence value.

In this embodiment of this specification, binarization processing may be performed based on an RGB value of the first region image, to obtain the binary sequence. During actual application, an existing binarization processing manner may be used for processing. This is not specifically limited herein.

In an implementation, the server may first divide the first region image, and then perform binarization processing, to improve accuracy of an obtained binary sequence value. Optionally, in this embodiment of this specification, the performing binarization processing on the first region image, to obtain a binary sequence value may specifically include:
dividing the first region image into a plurality of sub-images based on distribution and a size of each unit rectangle in the padding region, where one sub-image corresponds to one unit rectangle; and
performing binarization processing on the plurality of sub-images, to obtain the binary sequence value.

In this embodiment of this specification, the first region image of the to-be-fused artistic image may be divided based on the distribution and the size of each unit rectangle in the padding region of the two-dimensional code template, and a size and a position of one sub-image in the first region image are the same as that of a corresponding unit rectangle. Binarization processing may be performed on each sub-image in an existing binarization manner, and then binary values may be integrated in a padding order of the two-dimensional code template, to obtain the binary sequence value.

In an implementation, the server may first perform grayscale processing on the first region image, and then perform binarization processing based on a result of the grayscale processing. Optionally, in this embodiment of this specification, the performing binarization processing on the plurality of sub-images may specifically include:
performing grayscale processing on the plurality of sub-images, to obtain grayscale images; and
determining, based on grayscale values of the grayscale images corresponding to the plurality of sub-images, binary values corresponding to the plurality of sub-images.

The grayscale processing in this embodiment of this specification may be processing performed by using at least one of a maximum value method, an average value method, or a weighted averaging method. During actual application, whether the grayscale value corresponding to the sub-image is greater than a preset grayscale value may be determined, to determine the binary value of the sub-image. If the grayscale value of the sub-image is greater than the preset grayscale value, the binary value of the sub-image may be determined as 1. If the grayscale value of the sub-image is less than or equal to the preset grayscale value, the binary value of the sub-image may be determined as 0. For example, if the preset grayscale value is 158, and a grayscale value of a sub-image is 34, a binary value of the sub-image may be determined as 0. It may be understood that a sub-image having a grayscale value greater than the preset grayscale value is relatively bright, and a sub-image having a grayscale value less than or equal to the preset grayscale value is relatively dark. A result of the binarization may alternatively be obtained in an existing grayscale processing manner and an existing binarization manner. This is not specifically limited herein.

In an implementation, optionally, in this embodiment of this specification, the generating, based on a binary sequence value corresponding to the first region image, a padding data sequence in a padding bit region in the encoded data stream corresponding to the two-dimensional code template may specifically include:
determining, based on a position that is of a character that can be padded at each unit rectangle in the padding region and that is in the encoded data stream corresponding to the two-dimensional code template, a position that is of a binary value of a sub-image corresponding to each unit rectangle in the first region image and that is in the padding bit region in the encoded data stream; and
placing the binary value of the sub-image at the corresponding position based on the position that is of the binary value of each sub-image and that is in the padding bit region in the encoded data stream, to generate the padding data sequence in the padding bit region in the encoded data stream.

During actual application, because a padding order of padding the two-dimensional code template by using a binary code stream is known, after a to-be-used two-dimensional code template is determined, to be specific, a version and an error correction level are determined, a padding position of each character in the binary code stream in the two-dimensional code template may be determined in the known padding order, in other words, a position of each padding code of a padding region in the binary code stream in the two-dimensional code template may be determined. Further, each character in the padding region in the binary code stream may be determined based on the first region image in the to-be-fused artistic image in a reverse deduction manner.

In this embodiment of this specification, the server may further establish a first coordinate system based on the two-dimensional code template, to obtain first coordinate information of each unit matrix. The first coordinate information may be a position of a center point of the unit matrix in the first coordinate system. The server may establish a second coordinate system in the to-be-fused image that has the same size as the two-dimensional code template. A position of a coordinate origin of the second coordinate system may correspond to a position of an origin of the first coordinate system in the two-dimensional code template, and positive directions of a horizontal axis and a vertical axis are also the same as those of the first coordinate system. For example, a first coordinate system is established in the two-dimensional code template by using an upper left corner as a coordinate origin, using a rightward direction as a positive direction of a horizontal axis, and using a downward direction as a positive direction of a vertical axis. In this case, a second coordinate system may be established in the to-be-fused artistic image by using an upper left corner as a coordinate origin, using a rightward direction as a positive direction of a horizontal axis, and using a downward direction as a positive direction of a vertical axis. The server may determine, in the second coordinate system based on first coordinate information of the unit rectangle corresponding to the padding region in the two-dimensional code template, second coordinate information whose value is the same as that of the first coordinate information, and select a sub-image having a size the same as that of the unit rectangle based on the size of the unit rectangle and by using the second coordinate information as a center, to obtain the corresponding first region image and a correspondence between positions of the first region image and the sub-image. During actual application, the server may pad, at positions that are in the padding region in the two-dimensional code template and that are the same as coordinate positions of the sub-images, the binary values obtained by performing binarization on the sub-images, to obtain binary values corresponding to the unit rectangles in the padding region. The binary values are integrated, to obtain the padding data sequence.

During actual application, when the padding region in the two-dimensional code is padded, based on arrangement of a matrix in the two-dimensional code template, one-to-one correspondence may be performed between the matrix and the sub-images in the first region image. Corresponding binary values are padded at corresponding positions in the matrix in the two-dimensional code template, to generate the initial two-dimensional code image. For a padding region in aggregated distribution, a complete first region image may be obtained. This may be understood as that positions of code elements in the first region image are adjacent to each other in the template. For a padding region in discrete distribution, a region in which there is an interval between data streams and which has a contour of the first region image may be obtained. This may be understood as that code elements corresponding to the padding region are not adjacent to each other in the template, and code element information of the data region may be padded between two code elements. An effect presented from the image is that display positions of the code elements in the padding region are dispersed.

As described above, in embodiments of this specification, the target data may be encoded according to the plurality of coding schemes, to obtain the shortest code, so as to reserve more characters for the padding region, and also improve an identification rate. Optionally, in this embodiment of this specification, the plurality of coding schemes may include a coding scheme for encoding in a single coding mode and/or a coding scheme for encoding in a hybrid coding mode.

In this embodiment of this specification, the single coding mode may indicate a coding scheme in which the target data is encoded according to one coding scheme. The hybrid coding mode may indicate a coding scheme in which the target data is encoded according to at least two coding schemes. A specific to-be-used coding mode may be determined based on a length of a quantity of bits that corresponds to one character in various coding schemes and a type of a character that can be encoded according to each coding scheme. A main objective of both the single coding mode and the hybrid coding mode is to reduce a quantity of bits occupied by the target data in the two-dimensional code template and increase a quantity of bits occupied by the padding region. In this way, a length of encoded data can be reduced, and more padding regions for padding the padding data sequence corresponding to the to-be-fused artistic image are left, so that the generated artistic two-dimensional code is more aesthetic.

It is clear that, during actual application, a coding scheme may alternatively be determined based on a character type included in the target data, and the target data is encoded according to the determined coding scheme. The coding scheme may be a single coding mode, or may be a hybrid coding mode. A specific to-be-used coding scheme may be determined based on an actual requirement.

In an implementation, the server may select a corresponding coding scheme based on a character type included in the target data, to obtain the shortest target data code. Optionally, the method in this embodiment of this specification may further include:
if the target data includes a digit, encoding the data according to a first coding rule; and
if the target data includes an uppercase letter, encoding the uppercase letter according to a second coding rule.

The first coding rule may represent a rule that can be for encoding digits, for example, encoding digits according to a coding scheme of the numeric mode corresponding to a numeric digit mode. The second coding rule may represent a rule that can be for encoding uppercase letters, for example, encoding uppercase letters according to a coding scheme of the alphanumeric mode corresponding to an alphanumeric digit-letter-special character mode.

During actual application, if character data in the target data includes lowercase letters, the lowercase letters may further be encoded according to a third encoding rule. For example, the lowercase letters are encoded according to a coding scheme of the byte mode corresponding to a byte ASCII mode. When the target data includes a plurality of different types of character data, the hybrid coding mode may be used. For example, if the target data is HTTPS://123.123.NET/COM, two coding schemes, namely, a numeric mode and an alphanumeric mode, may be used to encode the target data. Alternatively, encoding may be independently completed in a byte mode, to obtain another coding scheme, and then an encoded result with a shortest length is selected for subsequent processing. During actual application, a length of an encoded result obtained by performing encoding in the byte mode is usually greater than a length of an encoded result obtained in another mode, for example, the foregoing hybrid coding scheme. Therefore, the coding scheme of the byte mode is not recommended for data that can be processed according to another coding scheme. It is clearly that a coding scheme may alternatively be determined based on an actual requirement.

In an implementation, to better reflect the main feature of the to-be-fused artistic image, an appropriate two-dimensional code template may further be selected based on the main feature, to accommodate the main feature of the to-be-fused artistic image. Optionally, the method in this embodiment of this specification may further include:
selecting, from a preset two-dimensional code template based on a length of a data code corresponding to target data, a first two-dimensional code template whose data capacity is greater than the length of the data code, where the data code is data obtained by encoding the target data according to a preset coding scheme;
determining a first padding region that is in the first two-dimensional code template and that is for placing a padding bit character in an encoded data stream corresponding to the first two-dimensional code template;
determining, based on the first padding region, a sub-region that is in the to-be-fused artistic image and that corresponds to the first padding region;
determining whether the sub-region of the to-be-fused artistic image includes a drawn object of the to-be-fused artistic image; and
if the sub-region of the to-be-fused artistic image includes the drawn object of the to-be-fused artistic image, determining the first two-dimensional code template as a two-dimensional code template for generating the initial two-dimensional code image; or
if the sub-region of the to-be-fused artistic image does not include the drawn object of the to-be-fused artistic image, selecting a second two-dimensional code template from the preset two-dimensional code template, where a data capacity of the second two-dimensional code template is greater than that of the first two-dimensional code template.

In this embodiment of this specification, the data capacity may represent a quantity of codes that can be accommodated in the two-dimensional code template, and is usually represented by using bit. The preset two-dimensional code template may be a pre-existing two-dimensional code template, for example, existing 40 two-dimensional code templates. The first two-dimensional code template may be a template that can accommodate encoded data corresponding to the target data and that is determined based on a capacity of each preset two-dimensional code template. During actual application, there may be a plurality of templates that can accommodate the encoded data corresponding to the target data, and the first two-dimensional code template may be a two-dimensional code template randomly selected from the plurality of templates, or may be a two-dimensional code template determined according to a rule. For example, a two-dimensional code template may be selected based on a version of the two-dimensional code template in descending order. A data capacity in the selected two-dimensional code template may be compared with a data encoding length of the target data. If the data capacity in the two-dimensional code template is less than or equal to the data encoding length of the target data, a next version at a higher level is selected for comparison. If the data capacity in the two-dimensional code template of this version is greater than the data encoding length of the target data, the two-dimensional code template may be determined as the first two-dimensional code template.

In this embodiment of this specification, a first padding region may represent the padding region that is in the first two-dimensional code template and that is for placing the padding data sequence generated based on the to-be-fused artistic image. The sub-region may be determined by adjusting the to-be-fused artistic image and the first two-dimensional code template to a same size, and then determining an image region corresponding to the first padding region in the to-be-fused artistic image.

In this embodiment of this specification, the drawn object may be a main feature in the to-be-fused artistic image, for example, an avatar, a building, or an animal. The second two-dimensional code template may be a two-dimensional code template whose version is higher than that of the first two-dimensional code template by one, or may be a two-dimensional code template whose error correction level is one level lower. Subsequently, whether a sub-region in the second two-dimensional code template includes the drawn object of the to-be-fused artistic image may continue to be determined in a similar manner, until a two-dimensional code template that may include the drawn object of the to-be-fused artistic image is obtained. There may be one or more two-dimensional code templates that may include the drawn object of the to-be-fused artistic image.

In an implementation, optionally, in this embodiment of this specification, the determining whether the sub-region of the to-be-fused artistic image includes a drawn object of the to-be-fused artistic image may specifically include:
obtaining an object region of the drawn object in the to-be-fused artistic image;
aligning the first two-dimensional code template with the to-be-fused artistic image, and adjusting the first two-dimensional code template and the to-be-fused artistic image to a same size;
obtaining first position information of the object region in the to-be-fused artistic image;
obtaining second position information of the padding region in the first two-dimensional code template; and
determining whether the region indicated by the first position information is located in the region indicated by the second position information.

The object region in this embodiment of this specification may be obtained through identification by using a segmentation model, or may be a manually selected region. For a specific alignment manner, the manner in the size adjustment part described above may be used. Details are not described herein again. It may be understood that coordinates of corresponding positions in the two-dimensional code template and the artistic image are the same. The first position information may be represented by using coordinates in a coordinate system corresponding to the artistic image. The second position information may be represented by using coordinates in a coordinate system corresponding to the two-dimensional code template.

To enable the generated artistic two-dimensional code to embody a feature of the artistic image as a whole, optionally, in this embodiment of this specification, the fusing the initial two-dimensional code image with a second region image of the to-be-fused artistic image may specifically include:
obtaining another region image different from a padding region in the initial two-dimensional code image; and
performing image fusion on the another region image and the second region image of the to-be-fused artistic image, to generate the artistic two-dimensional code image.

In this embodiment of this specification, the image fusion may alternatively represent style transfer. Image fusion may be performed on the another region image and the second region image by using the existing AI model. The existing AI model may include models such as a supervised model, an unsupervised/self-supervised model, a LORA model, a checkpoint model, a ControlNet model, a GAN model, a significance model, a transform/self-attention model, a task driven model, a fusion model of different resolutions, and a guided filtering auxiliary model that are for infrared and visible light image fusion. For example, a ControlNet model may be used to control a production element, and control a generated two-dimensional code, a checkpoint model is used to store a model parameter, and a LORA model is used together to generate an artistic two-dimensional code image. When the AI model is used for fusion, a fusion region may be set. For example, the initial two-dimensional code image and the to-be-fused artistic image may be used as input of the model, and another region in the initial two-dimensional code image and a corresponding region in the to-be-fused artistic image may be set as a fusion region, so that the AI model performs processing based on the set region, to output the artistic two-dimensional code image. In addition, the initial two-dimensional code may be extracted before fusion is performed by using the AI model, to obtain another region image. A corresponding region image of the another region image in the to-be-fused artistic image may also be extracted. The extracted another region image and the corresponding region image may be used as input of the AI model, to obtain a region fusion image output by the AI model. Then, the region fusion image may be covered on the another region image in the initial two-dimensional code, to obtain the artistic two-dimensional code image.

During actual application, the to-be-fused artistic image may be a color image, so that the artistic image is better fused in the generated artistic two-dimensional code, to achieve better user experience. Optionally, in this embodiment of this specification, before the artistic two-dimensional code image is generated, the method may further include:
covering a padding region of the initial two-dimensional code image with the first region image.

In this embodiment of this specification, after the initial two-dimensional code is generated, the first region image may be covered on the padding region, so that the image of the padding region has a color. Before the initial two-dimensional code image is fused with a second region of the to-be-fused artistic image, the first region image may be covered on the padding region of the initial two-dimensional code image. Alternatively, after the initial two-dimensional code image is fused with the second region of the to-be-fused artistic image, and before the artistic two-dimensional code image is generated, the first region image may be covered on the padding region of a fused two-dimensional code image.

During actual application, the server may determine, from the artistic image, a position corresponding to each unit rectangle in the padding region in the initial two-dimensional code, obtain color information of the corresponding position, and may add the color information to a corresponding position in the two-dimensional code, so that the padding region is displayed in a color.

To make the artistic two-dimensional code have higher overall fusion and be more aesthetic, optionally, in this embodiment of this specification, the artistic two-dimensional code image includes a plurality of artistic two-dimensional code images, and the method may further include:
evaluating the artistic two-dimensional code images according to an availability evaluation rule, to obtain availability scores; and
outputting an artistic two-dimensional code image having a highest score.

A plurality of initial two-dimensional code images may be obtained in manners such as different two-dimensional code template versions, error correction levels, mask patterns, mirror and non-mirror processing, and rotation processing, and then each initial two-dimensional code image and the to-be-fused artistic image are processed to obtain the plurality of artistic two-dimensional code images.

In this embodiment of this specification, the artistic two-dimensional code images may be evaluated based on information such as a fault tolerance rate of the encoded data in the artistic two-dimensional code image and features and colors included in the artistic image. The artistic two-dimensional code images may be generated based on two-dimensional code templates of different versions or error correction levels.

During actual application, there may be one artistic two-dimensional code that is generated. Then, the artistic two-dimensional code is evaluated. If a score of the artistic two-dimensional code is lower than a threshold, another two-dimensional code template may be selected to regenerate an artistic two-dimensional code image for being scored. When a score is higher than or equal to the threshold, the artistic two-dimensional code image may be output as a target artistic two-dimensional code image to be displayed to the user.

In this embodiment of this specification, identifiability of the artistic two-dimensional code may be evaluated. In an implementation, optionally, in this embodiment of this specification, the evaluating the artistic two-dimensional code images according to an availability evaluation rule may specifically include:
for any artistic two-dimensional code image of the artistic two-dimensional code images, performing binarization processing on the any artistic two-dimensional code image, to obtain a binary image;
obtaining a plurality of sampling points in the binary image, where one sampling point corresponds to one unit rectangle in the two-dimensional code template;
determining a sampling binary value of each sampling point in the binary image;
determining a preset binary value corresponding to each sampling point, where the preset binary value is a binary value in an encoded data stream used for generating the initial two-dimensional code image;
determining an abnormal sampling point in the sampling points based on the sampling binary value and the preset binary value, where a sampling binary value of the abnormal sampling point is inconsistent with a corresponding preset binary value; and
evaluating the artistic two-dimensional code images according to a proportion of the abnormal sampling point.

The sampling point may represent a unit rectangle obtained by dividing the two-dimensional code template based on a matrix of the two-dimensional code template for generating the artistic two-dimensional code, and may be used as a sampling position of sampling data for verifying whether the artistic two-dimensional code image meets a requirement. The preset binary value corresponding to the sampling point may represent sampling data obtained by sampling in the artistic two-dimensional code based on a position of the sampling point after a corresponding position of the unit rectangle of the two-dimensional code template in the artistic two-dimensional code is determined. It may be understood that the sampling data may be a binary value that is 0 or 1 and that is obtained after binarization processing is performed on the artistic two-dimensional code.

In this embodiment of this specification, a position corresponding to the sampling point in the initial two-dimensional code image may be determined based on the position of the sampling point or a position of the sampling point in the two-dimensional code template, and a corresponding binary value in the initial two-dimensional code may be determined based on the position corresponding to the sampling point in the initial two-dimensional code image, so as to determine whether the binary value in the initial two-dimensional code image is the same as the sampling data corresponding to the sampling point. If the binary value in the initial two-dimensional code image is different from the sampling data corresponding to the sampling point, the sampling point may be used as an abnormal sampling point. A proportion of the abnormal sampling point may further be calculated based on a data sequence after sorting, and the sampling points may be sorted according to a preset padding rule of the two-dimensional code template. The abnormality ratio may be obtained by comparing a binary data sequence corresponding to sorted sampling points with an initial binary data sequence obtained by sorting the initial two-dimensional code image according to the preset padding rule.

In this embodiment of this specification, availability of the artistic two-dimensional code may also be manifested as aesthetics of the artistic two-dimensional code. In an implementation, optionally, in this embodiment of this specification, the evaluating the artistic two-dimensional code images according to an availability evaluation rule may specifically include:
evaluating the artistic two-dimensional code images by using a pre-trained beautification degree evaluation model.

The beautification degree in this embodiment of this specification may be determined based on a similarity between the artistic two-dimensional code image and the artistic image, or may be determined based on comparison between a feature in the artistic two-dimensional code image and a feature in the artistic image. The beautification degree evaluation model may be obtained by training a computer model such as a neural network model by using a preset training sample. The training sample may include a plurality of artistic two-dimensional codes with an aesthetic score label, and the label may be obtained by marking based on expert experience. The training sample may include marked artistic two-dimensional code samples having different scores, so that the computer model can be fully trained.

To describe an artistic two-dimensional code image generation method according to an embodiment of this specification more clearly, FIG. 5 is a swim lane diagram of an artistic two-dimensional code image generation method according to an embodiment of this specification. As shown in FIG. 5, the method may include an information obtaining phase, a data padding phase, and an artistic two-dimensional code image generation phase, and may specifically include the following steps.

Step 502: A user inputs target data on a terminal.

In this embodiment of this specification, the target data may include at least one of character string data such as a website, a link, or a character that needs to be identified. The terminal may include at least an operation interface for the user to operate. The user may input the target data on the operation interface, and the user may further select an error correction level on the operation interface. On the operation interface, the error correction level is an unnecessary option, and a server may subsequently set, based on data such as a two-dimensional code template and a security level of information, an error correction level meeting a requirement.

Step 504: The server obtains the target data, and encodes the target data, to obtain encoded data.

Single encoding or hybrid encoding may be performed on the target data according to the foregoing coding scheme, to obtain a plurality of different data sequences, and a shortest data sequence in the plurality of different data sequences may be used as the encoded data.

Step 506: The server determines a two-dimensional code template based on the encoded data.

A two-dimensional code template may be determined based on data capacities of two-dimensional code templates of various versions and a length of the encoded data of the target data. If the user sets the error correction level, a two-dimensional code template that can accommodate the encoded data may be further determined based on the length of the encoded data and the error correction level.

Step 508: The user selects a to-be-fused artistic image or inputs description information on the terminal.

In this embodiment of this specification, the terminal may include at least an operation interface for selecting an artistic image by the user, and the interface may be the same as or different from the interface for inputting the target data by the user. The user may select or input, on the operation interface for selecting an artistic image, description labels, such as a person, an animal, and scenery, of the to-be-fused artistic image needed by the user. The to-be-fused artistic image may be generated based on the description labels by using an AI model. The user may alternatively select, as the to-be-fused artistic image, an image from a preset image library displayed on the operation interface for selecting an artistic image. It may be understood that the to-be-fused artistic image may be a dynamic image, or may be a static image.

Step 510: The server obtains a to-be-fused artistic two-dimensional code, and determines, based on the two-dimensional code template and the obtained to-be-fused artistic image, a first region image corresponding to a padding region in the two-dimensional code template.

In this embodiment of this specification, the padding region that is in the two-dimensional code template and that is for padding a padding bit character in a binary encoded data stream may be determined according to a padding rule of a two-dimensional code. The two-dimensional code template and the to-be-fused artistic image may be adjusted to the same size, and the first region image corresponding to the padding region in the two-dimensional code template is determined from the to-be-fused artistic image.

Step 512: The server generates a padding data sequence corresponding to the padding region based on the first region image.

In this embodiment of this specification, the server may perform binarization on the first region image, determine corresponding binary values, and sort the binary values to obtain the padding data sequence.

Step 514: The server generates an initial two-dimensional code template based on the padding data sequence and the two-dimensional code template.

A binary data stream for padding the two-dimensional code template may be generated based on the encoded data of the target data, a version of the two-dimensional code template, the error correction level, the padding data sequence, and the like. The binary data stream pads the two-dimensional code template according to a two-dimensional code padding rule, for example, padding from a lower right corner, to obtain the initial two-dimensional code image. Alternatively, the first region image may further cover the padding region of the initial two-dimensional code image.

Step 516: The server may determine another image region different from the padding region from the initial two-dimensional code image.

In this embodiment of this specification, the another image region may include at least some regions in regions that are in the initial two-dimensional code image and that are padded with data such as template pattern data, length data, target data, terminator data, 8-bit alignment data, and error correction data. It may be understood that the another image region may represent at least some regions other than the padding data sequence region corresponding to the to-be-fused artistic image in the initial two-dimensional code image.

Step 518: The server fuses the another region image with a second region image of the to-be-fused artistic image, to generate an artistic two-dimensional code.

In this embodiment of this specification, the second region image may be an image of a remaining region other than the first region image in the to-be-fused artistic image. Style transfer may be performed on the another region image based on the foregoing existing AI model and the second region image, to generate the artistic two-dimensional code having a feature of the to-be-fused artistic image. This avoids a case in which encoded data in a generated artistic two-dimensional code image is inconsistent with actual encoded data, improves a success rate of identifying the artistic two-dimensional code, and also makes the artistic two-dimensional code more beautiful and better meet a service requirement. During actual application, if the to-be-fused artistic image is a color image, the padding region of the initial two-dimensional code may further cover the first region image of the to-be-fused artistic image, and a color artistic two-dimensional code may be obtained.

Step 520: The terminal displays the artistic two-dimensional code to the user.

In this embodiment of this specification, the server may generate a plurality of artistic two-dimensional codes, select an artistic two-dimensional code having a highest score from the plurality of artistic two-dimensional codes based on an existing scoring model, and send the artistic two-dimensional code having a highest score to a display interface that is included in the terminal and that is for displaying the generated artistic two-dimensional code, so that the display interface can display the artistic two-dimensional code for ease of viewing by the user. If the user is not satisfied with the generated artistic two-dimensional code, the user may perform an operation again, to generate a new artistic two-dimensional code.

According to the foregoing method, the entire artistic two-dimensional code is more beautiful and has clear colors, bringing better experience to the user's vision, and also improving a success rate of identifying the artistic two-dimensional code, to better meet a service requirement.

During actual application, the server may further add a mask image in a process of generating the two-dimensional code. When the mask image is added, a mask image may be added to another region, and mask image addition is not performed to the padding region. In this way, it can be ensured that the padding region can present an image roughly consistent with a corresponding region of an artistic image.

During actual application, for a brand image of a commodity, a brand mark is usually in a middle region of the image. It can be known according to a two-dimensional code generation principle that, usually, a padding code for the padding region also pads a middle region of a two-dimensional code template. In this embodiment of this specification, the generated artistic two-dimensional code can better represent the brand mark of the commodity. For example, for a LOGO of a merchant A, binarization processing may be performed on image data of the LOGO, and a binary sequence obtained through the binarization processing is padded in a padding region of a two-dimensional code template, to obtain an artistic two-dimensional code in which the LOGO of the merchant A is displayed in the middle. The artistic two-dimensional code may further be identified by a customer of the merchant A, and jump to an association page of the merchant A, for example, an official account, a payment page, an activity page, a shopping page, or an APP downloading page.

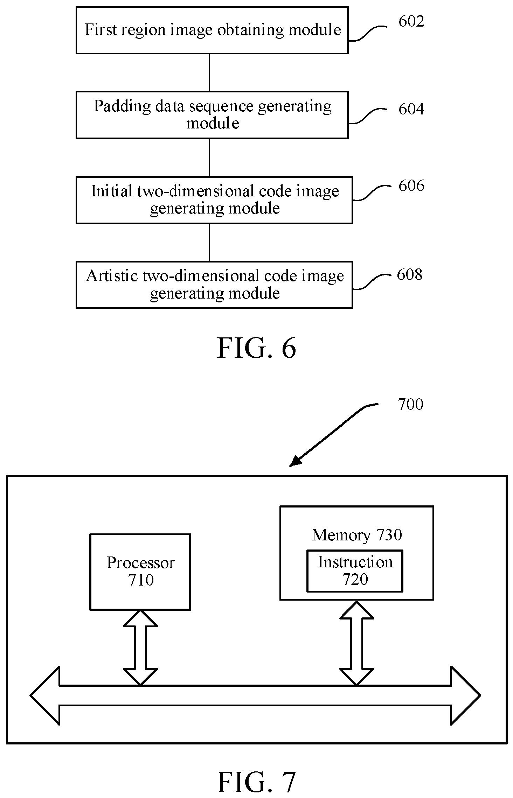

Based on the same concept, an embodiment of this specification further provides an apparatus corresponding to the foregoing method. FIG. 6 is a schematic diagram of a structure of an artistic two-dimensional code image generation apparatus according to an embodiment of this specification. As shown in FIG. 6, the apparatus may include:
a first region image obtaining module 602, configured to obtain a first region image that is in a to-be-fused artistic image and that corresponds to a padding region in a two-dimensional code template, where the padding region is a region that is in the two-dimensional code template and that is for placing a padding bit character in an encoded data stream;
a padding data sequence generating module 604, configured to generate, based on a binary sequence value corresponding to the first region image, a padding data sequence in a padding bit region in the encoded data stream corresponding to the two-dimensional code template;
an initial two-dimensional code image generating module 606, configured to generate an initial two-dimensional code image based on the padding data sequence; and
an artistic two-dimensional code image generating module 608, configured to fuse the initial two-dimensional code image with a second region image of the to-be-fused artistic image, to generate the artistic two-dimensional code image, where the second region image is an image other than the first region image in the to-be-fused artistic image.

Based on the same concept, an embodiment of this specification further provides a device corresponding to the foregoing method.

FIG. 7 is a schematic diagram of a structure of an artistic two-dimensional code image generation device according to an embodiment of this specification. As shown in FIG. 7, the device 700 may include:
at least one processor 710; and
a memory 730 in communication connection with the at least one processor.

The memory 730 stores instructions executable by the at least one processor 710, and the instructions 720 are executed by the at least one processor 710, to cause the at least one processor 710 to:
obtain a first region image that is in a to-be-fused artistic image and that corresponds to a padding region in a two-dimensional code template, where the padding region is a region that is in the two-dimensional code template and that is for placing a padding bit character in an encoded data stream;
generate, based on a binary sequence value corresponding to the first region image, a padding data sequence in a padding bit region in the encoded data stream corresponding to the two-dimensional code template;
generate an initial two-dimensional code image based on the padding data sequence; and
fuse the initial two-dimensional code image with a second region image of the to-be-fused artistic image, to generate the artistic two-dimensional code image, where the second region image is an image other than the first region image in the to-be-fused artistic image.

Based on the same concept, an embodiment of this specification further provides a computer-readable medium corresponding to the foregoing method. The computer-readable medium stores computer-readable instructions, and the computer-readable instructions may be executed by a processor to implement the foregoing artistic two-dimensional code image generation method.

Embodiments of this specification are all described in a progressive manner, for same or similar parts in embodiments, refer to these embodiments, and descriptions of each embodiment focus on a difference from other embodiments. In particular, the device shown in FIG. 7 is basically similar to the method embodiment, and therefore is only briefly described. For related parts, refer to partial descriptions in the method embodiment.

In the 1990s, improvements in a technology can be clearly categorized as hardware improvements (for example, improvements to a circuit structure such as a diode, a transistor, and a switch) and software improvements (improvements to a method procedure). However, with the development of technologies, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) (such as a field programmable gate array (FPGA)) is an integrated circuit whose logic function is determined by a user by programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler" software, which is similar to a software compiler used to write programs. An original code before compiling is also written in a specific programming language, which is referred to as Hardware Description Language (HDL). There are many types of HDL, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL). Currently, Very-High-Speed Integrated Circuit Hardware Description Language (VHDL) and Verilog are most commonly used. A person skilled in the art should also understand that as long as a method procedure is logically programmed and then programmed to an integrated circuit by using the foregoing hardware description language, a hardware circuit that implements the logical method procedure can be easily obtained.

The controller can be implemented in any suitable manner. For example, the controller can take the form of, for example, a microprocessor or processor and a computer-readable medium storing computer-readable program code (for example, software or firmware) executable by the processor (microprocessor), a logic gate, a switch, an Application Specific Integrated Circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller can also be implemented as a part of control logic of the memory. A person skilled in the art also appreciates that, in addition to implementing, by logically programming the method steps, the controller in the form of pure computer-readable program code, it is also possible to implement the controller in the form of a logic gate, switch, application specific integrated circuit, programmable logic controller, embedded microcontroller, and other forms to achieve the same function. Such a controller can thus be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments may be specifically implemented by a computer chip or an entity, or implemented by a product having a function. A typical device for implementation is a computer. Specifically, for example, the computer may be a personal computer, a laptop computer, a cellular phone, a camera phone, a smart phone, a personal digital assistant, a media player, a navigation device, an email device, a game console, a tablet computer, a wearable device, or a combination of any of these devices.

For ease of description, when the apparatus is described, the apparatus is divided into units according to functions, which are separately described. It is clear that, in implementation of this application, the functions of the units may be implemented in the same piece of or a plurality of pieces of software and/or hardware.

A person skilled in the art should understand that embodiments of the present invention may be provided as a method, a system, or a computer program product. Therefore, the present invention may use a form of hardware-only embodiments, software-only embodiments, or embodiments with a combination of software and hardware. Moreover, the present invention may use a form of a computer program product that is implemented on one or more computer-usable storage media (including but not limited to a disk memory, a compact disc read-only memory (CD-ROM), an optical memory, and the like) that include computer-usable program code.

The present invention is described with reference to the flowcharts and/or block diagrams of the method, the device (system), and the computer program product according to embodiments of the present invention. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the computer or the processor of another programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may be further loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, a computing device includes one or more processors (CPU), an input/output interface, a network interface, and a memory.

The memory may include forms such as a non-volatile memory, a random access memory (RAM) and/or a non-volatile memory in a computer-readable medium, for example, a read-only memory (ROM) or a flash memory (flash RAM). The memory is an example of the computer-readable medium.

The computer-readable medium includes a non-volatile medium and a volatile medium, a removable medium and a non-removable medium, which may implement storage of information by using any method or technology. The information may be computer-readable instructions, a data structure, a program module, or other data. Examples of the storage medium of the computer include, but are not limited to, a phase change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a magnetic cassette, a magnetic disk storage or another magnetic storage device or any other non-transmission medium, and may be used to store information that can be accessed by the computing device. According to limitations of this specification, the computer-readable medium does not include transitory computer-readable media (transitory media), such as a modulated data signal and a modulated carrier.

It should be further noted that the terms "include", "comprise", or any variants thereof are intended to cover non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "include a/an..." does not exclude other same elements existing in the process, the method, the article, or the device that includes the element.

A person skilled in the art should understand that embodiments of this application may be provided as a method, a system, or a computer program product. Therefore, this application may take the form of hardware-only embodiments, software-only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application can be described in the general context of computer-executable instructions executed by a computer, for example, a program module. Generally, the program module includes a routine, a program, an object, a component, a data structure, and the like for executing a particular task or implementing a particular abstract data type. This application can also be practiced in a distributed computing environment in which tasks are performed by remote processing devices that are connected through a communication network. In a distributed computing environment, the program module may be located in both local and remote computer storage media including storage devices.

The foregoing descriptions are merely embodiments of this application, but are not intended to limit this application. For a person skilled in the art, various modifications and variations can be made to this application. Any modification, equivalent replacement, or improvements made without departing from the spirit and principle of this application shall fall within the scope of the claims of this application.

## Claims

1. An artistic two-dimensional code image generation method, comprising:
obtaining a first region image that is in a to-be-fused artistic image and that corresponds to a padding region in a two-dimensional code template, wherein the padding region is a region that is in the two-dimensional code template and that is for placing a padding bit character in an encoded data stream;
generating, based on a binary sequence value corresponding to the first region image, a padding data sequence in a padding bit region in the encoded data stream corresponding to the two-dimensional code template;
generating an initial two-dimensional code image based on the padding data sequence; and
fusing the initial two-dimensional code image with a second region image of the to-be-fused artistic image, to generate the artistic two-dimensional code image, wherein the second region image is an image other than the first region image in the to-be-fused artistic image.

2. The method according to claim 1, wherein the method further comprises:
obtaining target data;
encoding the target data according to a plurality of coding schemes, to obtain a plurality of data codes; and
selecting a data code having a shortest length from the plurality of data codes as a target data code; and
wherein generating an initial two-dimensional code image based on the padding data sequence specifically comprises:
generating the initial two-dimensional code image based on the padding data sequence and the target data code.

3. The method according to claim 1, wherein obtaining a first region image that is in a to-be-fused artistic image and that corresponds to a padding region specifically comprises:
adjusting the to-be-fused artistic image and the two-dimensional code template to a same size; and
selecting the first region image from the to-be-fused artistic image based on the to-be-fused artistic image and the two-dimensional code template that have the same size and position information of the padding region in the two-dimensional code template.

4. The method according to claim 1, wherein the method further comprises:
performing binarization processing on the first region image, to obtain the binary sequence value.

5. The method according to claim 4, wherein performing binarization processing on the first region image, to obtain the binary sequence value specifically comprises:
dividing the first region image into a plurality of sub-images based on distribution and a size of each unit rectangle in the padding region, wherein one sub-image corresponds to one unit rectangle; and
performing binarization processing on the plurality of sub-images, to obtain the binary sequence value.

6. The method according to claim 1, wherein generating, based on a binary sequence value corresponding to the first region image, a padding data sequence in a padding bit region in the encoded data stream corresponding to the two-dimensional code template specifically comprises:
determining, based on a position that is of a character that can be padded at each unit rectangle in the padding region and that is in the encoded data stream corresponding to the two-dimensional code template, a position that is of a binary value of a sub-image corresponding to each unit rectangle in the first region image and that is in the padding bit region in the encoded data stream; and
placing the binary value of the sub-image at the corresponding position based on the position that is of the binary value of each sub-image and that is in the padding bit region in the encoded data stream, to generate the padding data sequence in the padding bit region in the encoded data stream.

7. The method according to claim 2, wherein the plurality of coding schemes comprise a coding scheme for encoding in a single coding mode and/or a coding scheme for encoding in a hybrid coding mode.

8. The method according to claim 2, wherein the method further comprises:
upon determining that the target data comprises a digit, encoding the data according to a first coding rule; and
upon determining that the target data comprises an uppercase letter, encoding the uppercase letter according to a second coding rule.

9. The method according to claim 1, wherein the method further comprises:
selecting, from a preset two-dimensional code template based on a length of a data code corresponding to target data, a first two-dimensional code template whose data capacity is greater than the length of the data code, wherein the data code is data obtained by encoding the target data according to a preset coding scheme;
determining a first padding region that is in the first two-dimensional code template and that is for placing a padding bit character in an encoded data stream corresponding to the first two-dimensional code template;
determining, based on the first padding region, a sub-region that is in the to-be-fused artistic image and that corresponds to the first padding region;
determining whether the sub-region of the to-be-fused artistic image comprises a drawn object of the to-be-fused artistic image; and
upon determining that the sub-region of the to-be-fused artistic image comprises the drawn object of the to-be-fused artistic image, determining the first two-dimensional code template as a two-dimensional code template for generating the initial two-dimensional code image; and
upon determining that the sub-region of the to-be-fused artistic image does not comprise the drawn object of the to-be-fused artistic image, selecting a second two-dimensional code template from the preset two-dimensional code template, wherein a data capacity of the second two-dimensional code template is greater than that of the first two-dimensional code template.

10. The method according to claim 1, wherein fusing the initial two-dimensional code image with a second region image of the to-be-fused artistic image specifically comprises:
obtaining another region image different from a padding region in the initial two-dimensional code image; and
performing image fusion on the another region image and the second region image of the to-be-fused artistic image, to generate the artistic two-dimensional code image.

11. The method according to claim 1, wherein before the artistic two-dimensional code image is generated, the method further comprises:
covering a padding region of the initial two-dimensional code image with the first region image.

12. The method according to claim 1, wherein the artistic two-dimensional code image comprises a plurality of artistic two-dimensional code images, and the method further comprises:
evaluating the artistic two-dimensional code images according to an availability evaluation rule, to obtain availability scores; and
outputting an artistic two-dimensional code image having a highest score.

13. The method according to claim 12, wherein evaluating the artistic two-dimensional code images according to an availability evaluation rule specifically comprises:
for any artistic two-dimensional code image of the artistic two-dimensional code images, performing binarization processing on the any artistic two-dimensional code image, to obtain a binary image;
obtaining a plurality of sampling points in the binary image, wherein one sampling point corresponds to one unit rectangle in the two-dimensional code template;
determining a sampling binary value of each sampling point in the binary image;
determining a preset binary value corresponding to each sampling point, wherein the preset binary value is a binary value in an encoded data stream used for generating the initial two-dimensional code image;
determining an abnormal sampling point in the sampling points based on the sampling binary value and the preset binary value, wherein a sampling binary value of the abnormal sampling point is inconsistent with a corresponding preset binary value; and
evaluating the artistic two-dimensional code images according to a proportion of the abnormal sampling point.

14. The method according to claim 12, wherein evaluating the artistic two-dimensional code images according to an availability evaluation rule specifically comprises:
evaluating the artistic two-dimensional code images by using a pre-trained beautification degree evaluation model.

15. An artistic two-dimensional code image generation apparatus, comprising:
a first region image obtaining module, configured to obtain a first region image that is in a to-be-fused artistic image and that corresponds to a padding region in a two-dimensional code template, wherein the padding region is a region that is in the two-dimensional code template and that is for placing a padding bit character in an encoded data stream;
a padding data sequence generating module, configured to generate, based on a binary sequence value corresponding to the first region image, a padding data sequence in a padding bit region in the encoded data stream corresponding to the two-dimensional code template;
an initial two-dimensional code image generating module, configured to generate an initial two-dimensional code image based on the padding data sequence; and
an artistic two-dimensional code image generating module, configured to fuse the initial two-dimensional code image with a second region image of the to-be-fused artistic image, to generate the artistic two-dimensional code image, wherein the second region image is an image other than the first region image in the to-be-fused artistic image.

16. An artistic two-dimensional code image generation device, comprising:
at least one processor; and
a memory in communication connection with the at least one processor, wherein
the memory stores instructions executable by the at least one processor, and the instructions are executed by the at least one processor, to cause the at least one processor to:
obtain a first region image that is in a to-be-fused artistic image and that corresponds to a padding region in a two-dimensional code template, wherein the padding region is a region that is in the two-dimensional code template and that is for placing a padding bit character in an encoded data stream;
generate, based on a binary sequence value corresponding to the first region image, a padding data sequence in a padding bit region in the encoded data stream corresponding to the two-dimensional code template;
generate an initial two-dimensional code image based on the padding data sequence; and
fuse the initial two-dimensional code image with a second region image of the to-be-fused artistic image, to generate the artistic two-dimensional code image, wherein the second region image is an image other than the first region image in the to-be-fused artistic image.

17. A computer-readable medium, storing computer-readable instructions, wherein the computer-readable instructions are executable by a processor, to implement the artistic two-dimensional code image generation method according to any one of claims 1 to 14.
